# FASCICULE DE BREVET EUROPEEN

(11) **EP 1 888 363 B1**
(45) Date de publication et mention de la délivrance du brevet: **03.03.2010**
(21) Numéro de dépôt: 06820246.4
(22) Date de dépôt: 24.05.2006
(51) Int. Cl.: B60K 20/06

(54) **DISPOSITIF DE COMMANDE DE CHANGEMENT DE RAPPORT DE VITESSES POUR VEHICULE, AU VOISINAGE DU VOLANT**
STEUERVORRICHTUNG ZUM ÄNDERN DES GESCHWINDIGKEITSVERHÄLTNISSES NAHE DEM LENKRAD FÜR EIN FAHRZEUG
SPEED RATIO SHIFT CONTROL DEVICE FOR VEHICLE, PROXIMATE THE STEERING WHEEL

(30) Priorité: 26.05.2005 FR 0505300
(43) Date de publication de la demande: 20.02.2008
(73) Titulaire: RENAULT S.A.S., 92100 Boulogne Billancourt (FR)
(72) Inventeur: RYKAERT, Jean-Jacques, F-93250 Villemomble (FR); FANDART, Didier, F-78460 Chevreuse (FR)
(86) Numéro de dépôt international: PCT/FR2006/050473
(87) Numéro de publication internationale: WO 2007/026085

(56) Documents cités:
- EP-A- 1 211 119
- EP-A1- 0 250 333
- FR-A- 2 792 085
- FR-A- 2 855 792

## Description

L'invention concerne les dispositifs de commande de changement de rapport de vitesses pour véhicule.

On connaît du document FR-2 855 792 au nom de la demanderesse un dispositif de commande de changement de rapport de vitesses pour véhicule selon le préambule de la revendication 1, comprenant un support portant deux bras sur lesquels sont placés des boutons de commande. Les boutons sont disposés sur la face arrière des bras, c'est-à-dire la face orientée vers le volant et le conducteur. Ce dernier peut, au moyen de ses pouces et sans ôter ses mains du volant, actionner les boutons pour modifier le rapport de vitesses du véhicule.

Toutefois, ce mode de commande peut se révéler inconfortable dans certaines situations.

Un but de l'invention est d'améliorer la commande de changement de support de vitesses.

A cet effet, on prévoit un dispositif de commande de véhicule selon la revendication 1.

Ainsi, cet agencement permet d'optimiser la position des doigts du conducteur sur les organes de commande. Ce sont certains des quatre doigts de la main, autres que le pouce, qui servent maintenant à la commande, et non plus ce dernier. De plus, le conducteur ne doit pas nécessairement faire passer ses doigts complètement à l'avant des organes, c'est-à-dire selon un plan parallèle à celui du volant. Il lui suffit de les disposer dans le plan de la face avant, ce qui correspond à une position plus naturelle des mains du conducteur lorsqu'elles sont placées sur le volant. Une forme légèrement biseautée des organes de commande permet d'optimiser la position des doigts du conducteur sur ces organes et offre donc une meilleure ergonomie.

Le dispositif selon l'invention pourra présenter en outre au moins l'une quelconque des caractéristiques suivantes :
- les organes de commande de changement de rapport s'étendent en regard d'une moitié supérieure de l'organe de direction ;
- le ou chaque organe de commande présente une face avant s'étendant dans un plan sensiblement vertical, ce plan étant incliné par rapport à la direction de marche du véhicule, en direction opposée à l'organe de direction ;
- l'inclinaison correspond à un angle compris entre 60 et 80° ;
- la plus grande portion de la partie mobile s'étend dans le prolongement de la base ;

D'autres caractéristiques et avantages de l'invention apparaîtront encore dans la description suivante d'un mode préféré de réalisation donné à titre d'exemple non limitatif en référence aux dessins annexés sur lesquels :

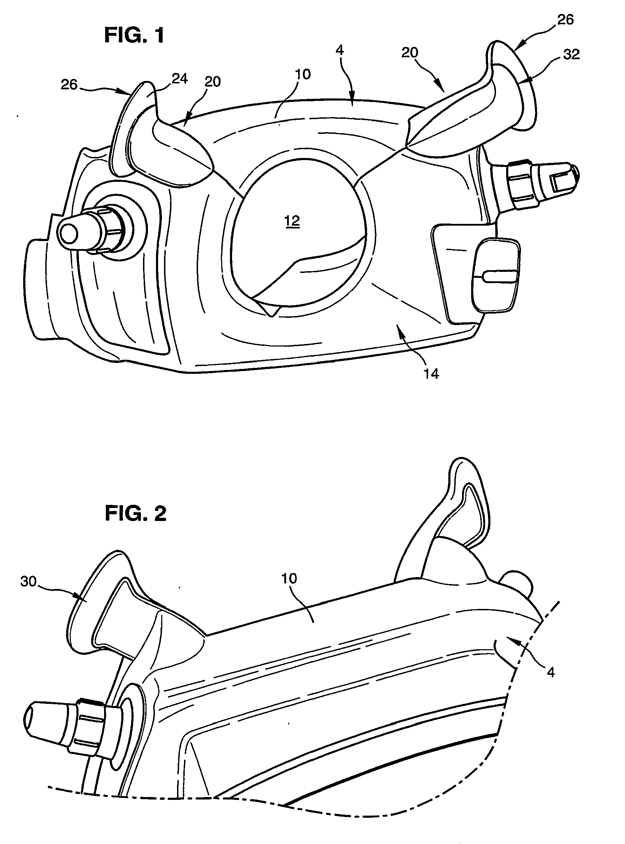

- les figures 1 et 2 sont deux vues en perspective respectivement arrière et avant par référence à la direction de marche du véhicule d'un dispositif selon l'invention ;

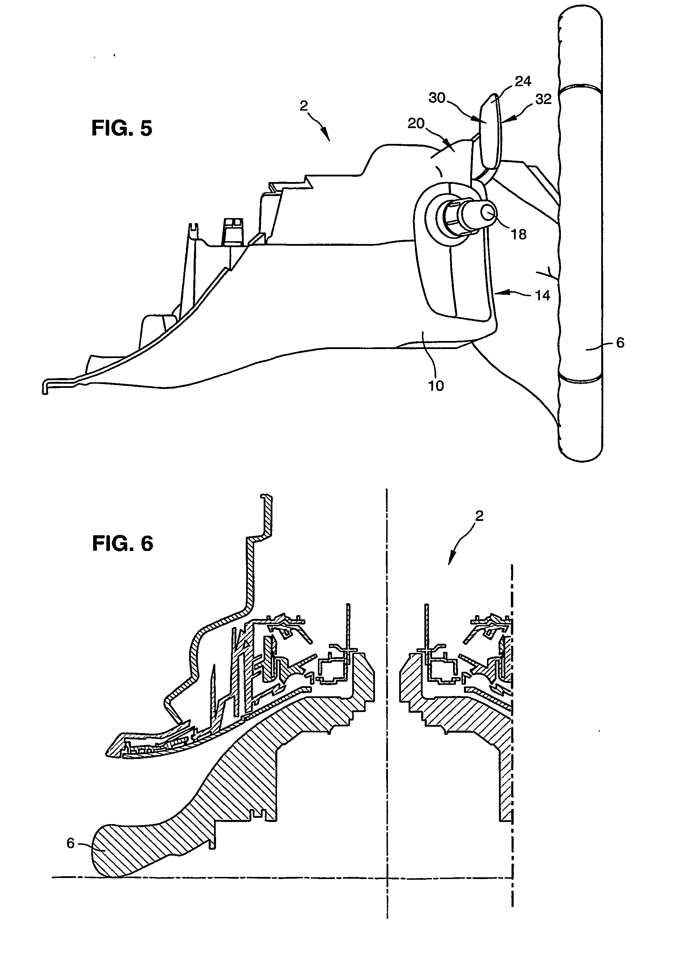

- les figures 3 à 5 sont trois vues respectivement arrière, de dessus et de gauche du dispositif de la figure 1 en présence d'un volant ;
- la figure 6 est une vue en coupe du dispositif de la figure 3 suivant le plan VI-VI ; et
- la figure 7 est un schéma illustrant l'orientation de la face avant des organes de changement de rapport de vitesses.

En référence aux figures, l'ensemble de conduite 2 selon l'invention comprend en l'espèce un dispositif de commande 4 et un volant 6. Le volant a une forme circulaire classique et est destiné à être monté mobile à rotation par référence à une planche de bord du véhicule autour de son axe 8. Le dispositif 4 comprend un support 10 présentant en son centre un orifice 12 à travers lequel passent des organes 13 de la colonne de direction associée au volant 6. L'axe 8 est l'axe de cet orifice et forme un axe principal du support 10. Le volant est monté mobile par rapport au support, notamment à rotation.

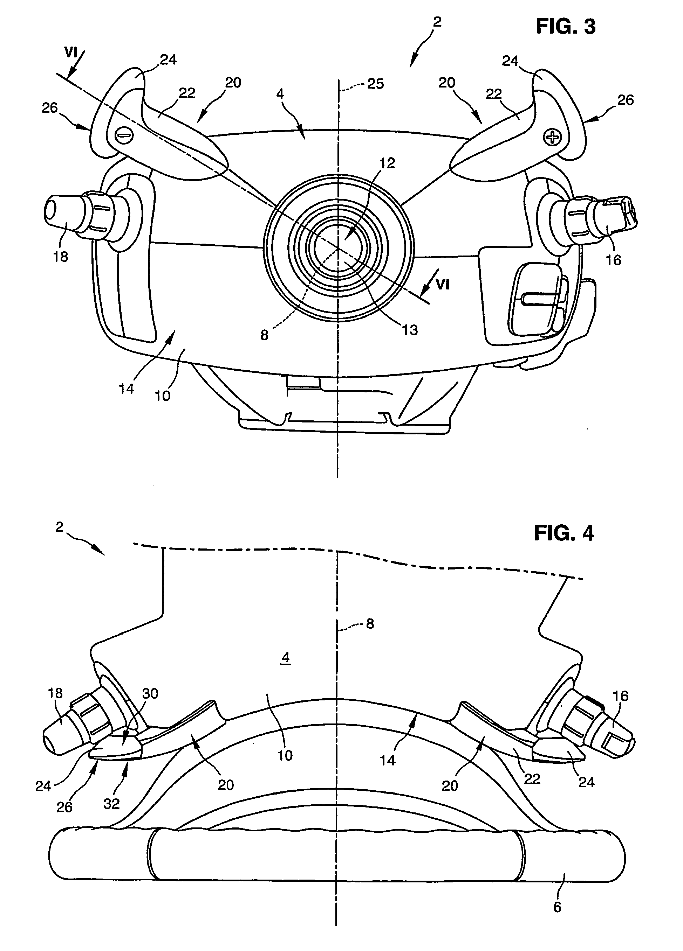

Le support 10 a une forme générale rectangulaire en vue arrière comme sur la figure 3. Il s'agit en l'espèce d'une coquille dont la face arrière 14, destinée à se trouver en regard du volant et du conducteur, a une forme convexe en portion de sphère dont le centre de courbure se trouve du même côté de cette face que le volant, comme on le voit en particulier sur la figure 4.

Le support 10 porte différents organes de commande du véhicule disposés par exemple sur des commodos 16 et 18 faisant saillie du support sur des côtés latéraux de celui-ci vers la gauche et la droite.

Le dispositif 4 comprend deux palettes 20 disposées sur un bord supérieur du support respectivement au niveau des coins supérieurs gauche et droit du rectangle. Chaque palette 20 comprend en l'espèce un bras ou base 22 et une partie de commande 24, formée ici par un interrupteur électrique connecté à un circuit électronique adapté non représenté. Les deux palettes se trouvent en regard d'une moitié supérieure du volant. Chaque partie 24 est montée mobile à rotation par rapport aux bras fixes 22.

Les bras 22 sont rigidement fixés au support 10. Ils ont une forme généralement allongée et présentent un axe longitudinal disposé selon une orientation radiale par rapport à l'axe 8, et inclinés par rapport à la verticale.

Les deux palettes 20 sont symétriques l'une de l'autre par rapport à un plan vertical médian 25 de l'ensemble de conduite passant par l'axe 8.

La plus grande portion de chaque interrupteur s'étend dans le prolongement de la base. Chaque interrupteur 24 présente un bord périphérique 26 s'étendant sur une partie de l'interrupteur opposée au bras 22 qui le porte. Le bord 26 a une forme courbe dont le centre de courbure se trouve du même côté de ce bord que l'interrupteur.

Chaque partie de commande 24 présente une face avant 30 et une face arrière 32 s'étendant toutes les deux sur des côtés opposés de la partie à partir du bord 26. La face arrière 32 se trouve en particulier en regard du volant 6. La face arrière 32 s'étend généralement dans un plan perpendiculaire à l'axe 8.

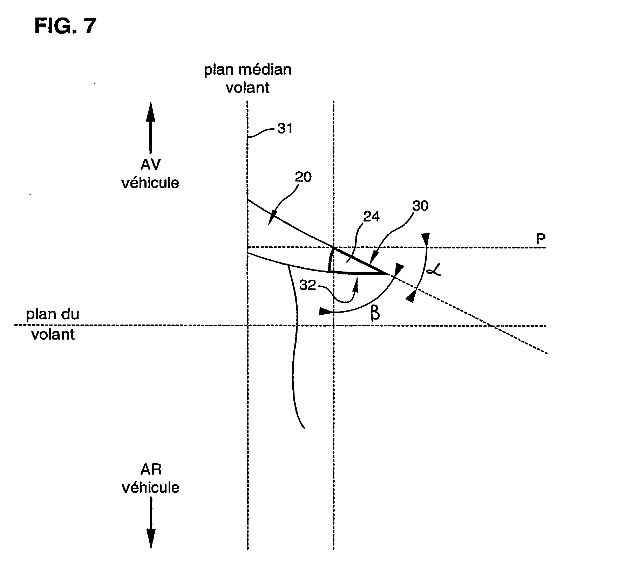

La face avant 30 s'étend dans un plan vertical et est inclinée par rapport à l'axe 8 en direction opposée à cet axe. Comme illustré sur la figure 7, le plan vertical de la face avant 30 est incliné par rapport à la direction de marche 31 du véhicule en direction opposée au volant. Cette inclinaison correspond en l'espèce à un angle β compris entre 60 et 80°C et égal ici à 70°C. En d'autres termes, le plan vertical de la face avant est incliné par rapport à un plan P perpendiculaire à la direction de marche 31, et d'un angle α compris entre 20 et 40° et ici égal à 20°.

Dans le présent exemple, chaque partie 24 est formée par un interrupteur électrique de sorte que, lorsque les doigts du conducteur s'appliquent sur la face 30 tandis qu'il tient le volant, ce contact commande l'interrupteur pour modifier le rapport de vitesses.

La palette gauche 20 permet une réduction du rapport de vitesses ou de transmission tandis que la palette droite permet son augmentation.

Compte tenu de la forme et des dimensions des palettes 20, lorsque le conducteur a posé ses mains sur le volant dans la position recommandée située à 10h10, ses doigts se trouvent naturellement en place pour appuyer sur les interrupteurs. A cette fin, le conducteur place ses doigts sur la face avant 30 et exerce un appui selon un mouvement dirigé sensiblement vers l'arrière du véhicule.

Les palettes sont prévues de sorte que le conducteur, même si ses mains sont relativement grandes, peut poser au moins trois doigts sur la palette, ce qui permet de l'actionner de façon confortable.

Les palettes selon l'invention nécessitent peu de place et sont peu encombrantes. Leur intégration au sein d'un poste de conduite est relativement aisée.

L'invention permet de changer le rapport de vitesses en haut de colonne de direction sans que le conducteur doive ôter l'une de ses mains du volant.

Naturellement, l'existence des palettes selon l'invention n'interdit pas que le véhicule possède en outre un levier de changement de rapport de vitesses situé sur le plancher ou sur la planche de bord.

Bien entendu, on pourra apporter à l'invention de nombreuses modifications sans sortir du cadre de celle-ci.

## Revendications

1. Dispositif (4) de commande de véhicule comprenant:
- un support (10);
- un organe de direction (6) monté mobile en rotation autour d'un axe (8) par rapport au support et
- deux organes (20) de changement de rapport de vitesses comportant une base (22) fixée rigidement au support (10) et présentant une unique extrémité, un des organes entraînant une augmentation du rapport de vitesse, et l'autre entraînant une réduction du rapport de vitesse, les deux organes (20) étant symétriques l'un de l'autre par rapport à un plan vertical médian du dispositif de commande passant par l'axe (8)
**caractérisé en ce que**
le ou chaque organe de changement de rapport de vitesses comprend une partie (24) montée mobile sur la base (22) et formant ladite extrémité, et **en ce que** la partie mobile présente un bord périphérique courbe (26) dont un centre de courbure est situé d'un même côte du bord que la partie mobile.

2. Dispositif selon la revendication précédente, **caractérisé en ce que** les organes (20) de commande de changement de rapport s'étendent en regard d'une moitié supérieure de l'organe de direction (6).

3. Dispositif selon l'une quelconque des revendications précédentes, **caractérisé en ce que** chaque organe de commande (20) présente une face avant (30) s'étendant dans un plan sensiblement vertical, ce plan étant incliné par rapport à la direction de marche (31) du véhicule, en direction opposée à l'organe de direction (6).

4. Dispositif selon la revendication précédente, **caractérisé en ce que** l'inclinaison correspond à un angle (β) compris entre 60 et 80°.

5. Dispositif selon l'une quelconque des revendications précédentes, **caractérisé en ce que** la plus grande portion de la partie mobile (24) s'étend dans le prolongement de la base (22).

## Claims

1. Vehicle control device (4) comprising:
- a support (10);
- a steering member (6) mounted rotatably about an axis (8) with respect to the support; and
- two gear ratio shift members (20) comprising a base (22) fastened rigidly to the support (10) and having a single end, one of the members leading to an increase in the gear ratio, and the other leading to a reduction in the gear ratio, the two members (20) being symmetrical to one another with respect to a vertical mid-plane of the control device passing through the axis (8),
**characterized in that**
the or each gear ratio shift member comprises a part (24) mounted movably on the base (22) and forming said end, and **in that** the movable part has a curved peripheral edge (26) of which a center of curvature is situated on the same side of the edge as the movable part.

2. Device according to the preceding claim, **characterized in that** the ratio shift control members (20) extend facing an upper half of the steering member (6).

3. Device according to either one of the preceding claims, **characterized in that** each control member (20) has a front face (30) extending in a substantially vertical plane, this plane being inclined with respect to the direction of travel (31) of the vehicle, in a direction away from the steering member (6).

4. Device according to the preceding claim, **characterized in that** the inclination corresponds to an angle (β) of between 60 and 80°.

5. Device according to any one of the preceding claims, **characterized in that** the major portion of the movable part (24) extends in the continuation of the base (22).

## Patentansprüche

1. Fahrzeugsteuervorrichtung (4) mit
- einer Stütze (10),
- einem Lenkelement (6), das bezüglich der Stütze um eine Achse (8) drehbeweglich montiert ist, und
- zwei Übersetzungsverhältnisänderungselementen (20), die eine Basis (22) umfassen, die starr an der Stütze (10) befestigt ist und ein einziges Ende aufweist, wobei eines der Elemente eine Erhöhung des Übersetzungsverhältnisses und das andere eine Reduzierung des Übersetzungsverhältnisses herbeiführt, wobei die beiden Elemente (20) bezüglich einer mittleren Vertikalebene der Steuervorrichtung, die durch die Achse (8) verläuft, zueinander symmetrisch sind,
**dadurch gekennzeichnet, dass**
das oder jedes Übersetzungsverhältnisänderungselement einen Teil (24) umfasst, der beweglich an der Basis (22) montiert ist und das Ende bildet, und
dass der bewegliche Teil einen gekrümmten Umfangsrand (26) aufweist, dessen Krümmungsmitte auf derselben Seite des Rands wie der bewegliche Teil angeordnet ist.

2. Vorrichtung nach dem vorhergehenden Anspruch, **dadurch gekennzeichnet, dass** sich die Verhältnisänderungssteuerelemente (20) gegenüber einer oberen Hälfte des Lenkelements (6) erstrecken.

3. Vorrichtung nach einem der vorhergehenden Ansprüche, **dadurch gekennzeichnet, dass** jedes Steuerelement (20) eine vordere Fläche (30) aufweist, die sich in einer im Wesentlichen vertikalen Ebene erstreckt, die bezüglich der Fahrtrichtung (31) des Fahrzeugs dem Lenkelement (6) entgegengesetzt geneigt ist.

4. Vorrichtung nach dem vorhergehenden Anspruch, **dadurch gekennzeichnet, dass** die Neigung einem Winkel (β) zwischen 60 und 80° entspricht.

5. Vorrichtung nach einem der vorhergehenden Ansprüche, **dadurch gekennzeichnet, dass** sich der größte Abschnitt des beweglichen Teils (24) in der Verlängerung der Basis (22) erstreckt.
